# FASCICULE DE BREVET EUROPEEN

(11) **EP 2 106 363 B1**
(45) Date de publication et mention de la délivrance du brevet: **14.09.2011**
(21) Numéro de dépôt: 07872431.7
(22) Date de dépôt: 21.12.2007
(51) Int. Cl.: B64C 1/00, B64C 30/00, B64D 27/00

(54) **FUSELAGE D'AÉRONEF**
FLUGZEUGRUMPF
AIRCRAFT FUSELAGE

(30) Priorité: 26.12.2006 FR 0611364
(43) Date de publication de la demande: 07.10.2009
(73) Titulaire: Airbus, 31700 Blagnac (FR); Airbus Operations, 31060 Toulouse (FR)
(72) Inventeur: SAINT-JALMES, Bruno, F- 31400 Toulouse (FR); ZANEBONI, Jason, F-31700 Blagnac (FR); BELLEVILLE, Mathieu, F-31380 Bazus (FR)
(74) Mandataire: Hartmann, Jean-Luc
(86) Numéro de dépôt international: PCT/FR2007/002148
(87) Numéro de publication internationale: WO 2008/096073

(56) Documents cités:
- EP-A2- 1 413 513
- WO-A-02/057135
- WO-A-2006/108957
- GB-A- 913 005
- US-A- 4 674 712
- US-A- 4 828 204
- "BOEING FLIGHT TO REVIVE SONIC INTEREST" FLIGHT INTERNATIONAL, REED BUSINESS INFORMATION, SUTTON SURREY, GB, vol. 162, no. 4850, 24 septembre 2002 (2002-09-24), page 6, XP001125175 ISSN: 0015-3710

## Description

La présente invention concerne un fuselage d'aéronef, notamment d'un aéronef destiné au transport commercial de passagers.

De manière classique, un fuselage d'aéronef présente une partie avant de forme aérodynamique arrondie, un fuselage central de forme globale cylindrique circulaire et une partie arrière de forme globale tronconique recevant un empennage. La partie avant loge le cockpit de l'aéronef. La partie centrale est destinée notamment à recevoir une cabine passagers et une soute. La voilure de l'aéronef est rattachée à cette partie centrale du fuselage de l'aéronef. Les moteurs de l'aéronef sont généralement solidaires de la voilure ou bien sont montés sur la partie arrière de l'aéronef.

Pour optimiser l'espace intérieur d'un aéronef, il est déjà connu de modifier la section de la partie centrale du fuselage. Ainsi, par exemple, le document EP-1 413 513 propose un fuselage d'aéronef comportant une première partie présentant une première dimension selon l'axe de lacet de l'aéronef et une troisième partie de fuselage présentant une troisième dimension selon l'axe de lacet de l'aéronef. La seconde dimension du fuselage selon l'axe de lacet de l'aéronef est inférieure à la première dimension correspondant à la première partie du fuselage et à la troisième dimension le long de l'axe de lacet correspondant à la troisième partie de fuselage. Un tel aéronef permet notamment d'avoir un profil conforme à la loi des aires.

La présente invention a pour but de fournir un fuselage d'aéronef qui permette de réaliser un gain d'espace à l'intérieur de l'aéronef tout en présentant des caractéristiques aérodynamiques intéressantes. Le fuselage présentera de préférence une section avantageuse pour résister aux contraintes dues à la pressurisation à l'intérieur de l'aéronef. Le fuselage permettra également de préférence une optimisation en termes d'aménagement intérieur, de centrage des masses et d'aérodynamique.

A cet effet, la présente invention propose alors un fuselage d'aéronef comportant une partie avant avec un cockpit, une partie centrale et une partie arrière.

Selon l'invention, la partie centrale du fuselage présente du côté de la partie avant une première zone dont la largeur, mesurée le long de l'axe de tangage, est croissante jusqu'à une largeur maximale de l'avant vers l'arrière de l'aéronef, une seconde zone dont la largeur est décroissante et une troisième zone en arrière de la seconde zone dont la largeur est sensiblement constante.

L'élargissement réalisé à l'avant du fuselage central de l'aéronef est intéressant car il permet tout d'abord d'augmenter le volume disponible dans l'aéronef pour disposer des sièges. Cette forme élargie du fuselage à l'avant est également favorable aérodynamiquement car elle permet d'augmenter la portance de l'aéronef.

Selon une première forme de réalisation d'un fuselage selon la présente invention, la seconde zone de la partie centrale du fuselage est raccordée directement à la première zone de la partie centrale du fuselage. On peut toutefois également prévoir que, pour loger un plus grand nombre de passagers dans la cabine de l'aéronef, la seconde zone de la partie centrale du fuselage est séparée de la première zone de la partie centrale de fuselage par une partie de fuselage dont la largeur correspond sensiblement à la largeur maximale du fuselage.

Pour permettre un embarquement et un débarquement des passagers plus rapide, il est proposé que le fuselage présente une première porte destinée à l'embarquement des passagers à l'arrière de la seconde zone du fuselage central ou à l'avant de la troisième zone du fuselage central. Bien entendu, une seconde porte disposée symétriquement par rapport au plan axial longitudinal vertical du fuselage est également prévue et la première porte évoquée plus est en réalité une paire de portes.

La voilure est rattachée au fuselage de préférence au niveau de la troisième zone du fuselage central pour des raisons aérodynamiques.

Pour favoriser d'une part le volume exploitable pour les passagers dans le fuselage et d'autre part augmenter la portance de ce fuselage, la section transversale du fuselage central présente avantageusement une forme arrondie aplatie présentant une largeur mesurée le long de l'axe de tangage supérieure à la hauteur mesurée le long de l'axe de lacet. Une variante de réalisation préférée prévoit que la section transversale du fuselage central présente la forme de deux arcs de cercle de grand rayon disposés l'un face à l'autre et correspondant à la partie supérieure et à la partie inférieure du fuselage central et reliés entre eux, avec une zone de transition, par deux arcs de cercle de rayon moindre et correspondants aux parois latérales du fuselage central. Cette forme permet d'avoir une structure résistance sans pour autant avoir à prévoir trop de renforts de la structure ni de trop alourdir celle-ci.

La hauteur de la partie centrale du fuselage, mesurée le long de l'axe de lacet, est de préférence sensiblement constante de manière à faciliter la fabrication de ce fuselage et son aménagement intérieur.

Pour un meilleur centrage des masses d'un aéronef avec un fuselage selon l'invention, les moteurs sont avantageusement disposés à l'arrière et sont rattachés à la partie arrière du fuselage. Ceci permet aussi d'avoir une cabine plus silencieuse en vol.

Pour le transport de marchandises, la partie arrière du fuselage est par exemple aménagée en soute pouvant accueillir deux conteneurs de type LD3.

La présente invention concerne également un aéronef, caractérisé en ce qu'il comporte un fuselage tel que décrit plus haut.

Des détails et avantages de la présente invention ressortiront mieux de la description qui suit, faite en référence aux dessins schématiques annexés sur lesquels :
La figure 1 est une vue en plan de la partie avant d'une cabine passagers d'un aéronef avec un fuselage selon l'invention,
La figure 2 est une vue correspondante à la figure 1 pour un aménagement intérieur différent de la cabine passagers,
La figure 3 est une vue en perspective d'un aéronef selon l'invention,
Les figures 4 à 6 sont respectivement des vues de face, de dessus et de côté de l'aéronef de la figure 3,
Les figures 7 à 9 sont des vues en perspective de variantes de réalisation d'un aéronef selon l'invention dans lesquels les moteurs sont portés par la partie arrière du fuselage de l'aéronef,
La figure 10 est une vue de côté de l'aéronef de la figure 7,
La figure 11 est une vue de côté d'une configuration « classique » d'un aéronef selon l'invention,
La figure 12 est une vue en perspective d'un aéronef selon l'invention présentant une voilure en position supérieure,
Les figures 13 à 15 sont respectivement des vues de face, de dessus et de côté de l'aéronef de la figure 12,
La figure 16 est une vue en coupe longitudinale schématique d'un aéronef selon l'invention,
La figure 17 est une vue en coupe horizontale montrant la configuration intérieure de l'aéronef de la figure 16,
La figure 18 est une vue en coupe transversale, à échelle agrandie, à travers la cabine d'une variante préférée d'un aéronef selon l'invention, et
La figure 19 montre la forme extérieure du fuselage en coupe transversale d'une forme de réalisation préférée correspondant par exemple aux figures 16 à 18.

Les dessins concernent chacun un aéronef qui présente un fuselage associé à une voilure et des moteurs.

Dans toute la description qui suit, les termes "avant", "arrière" se réfèrent à l'aéronef et à son sens de déplacement en vol. Les notions de positions relatives inférieures et supérieures se repèrent par exemple lorsque l'aéronef est en vol de croisière ou lorsqu'il est posé au sol.

De manière classique, le fuselage comporte trois parties : une partie avant 2, une partie centrale 4 et une partie arrière 6.

Dans la partie avant 2 du fuselage se trouve un cockpit formant un poste de pilotage de l'aéronef. Ce poste de pilotage comporte notamment tous les éléments de commande pour le pilotage de l'aéronef, des écrans de contrôle, des moyens de communication d'une part internes à l'aéronef et d'autre part externes pour communiquer avec une tour de contrôle ou bien encore d'autres aéronefs, des sièges pour les pilotes, etc..

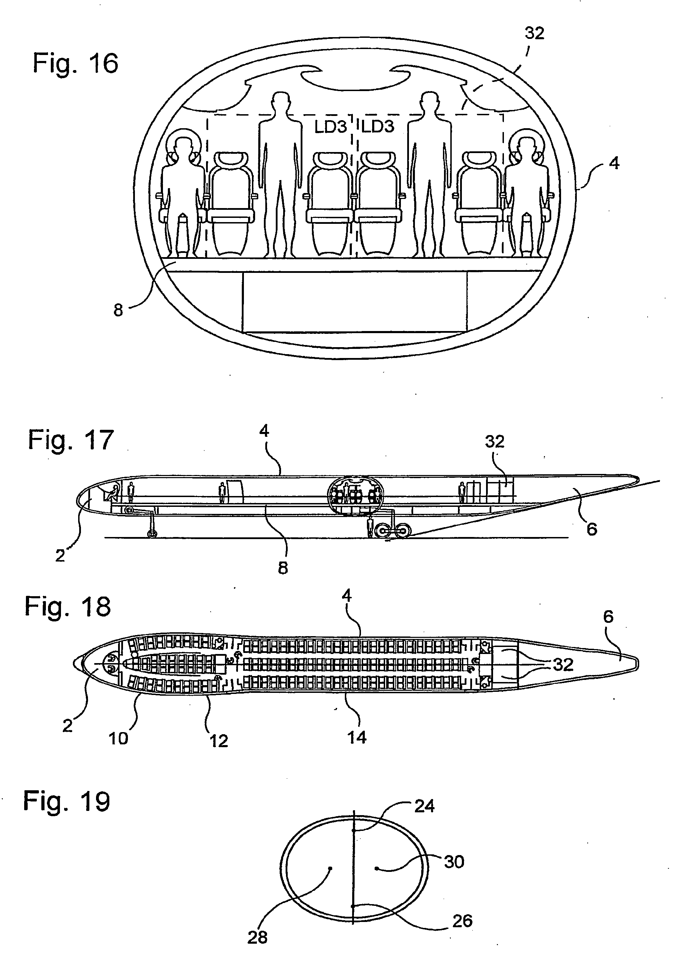

La partie centrale 4 du fuselage se trouve juste derrière la partie avant 2. Cette partie du fuselage est notamment destinée à accueillir des passagers, leurs bagages et éventuellement des marchandises. A cet effet, la partie centrale 4 du fuselage comporte notamment une cabine aménagée sur un plancher de cabine 8 formant un pont (figures 16 et 18).

La partie arrière 6 du fuselage présente, pour des raisons notamment aérodynamiques, une forme rappelant un cône. Il reçoit de façon classique un empennage qui varie selon les formes de réalisation de l'aéronef selon l'invention.

La présente invention concerne tout d'abord la partie centrale 4 du fuselage. Celle-ci comporte trois zones : une première zone 10 à l'avant de la partie centrale 4, une seconde zone 12 disposée à l'arrière de la première zone 10 et enfin une troisième zone 14 à l'arrière de la partie centrale 4 du fuselage.

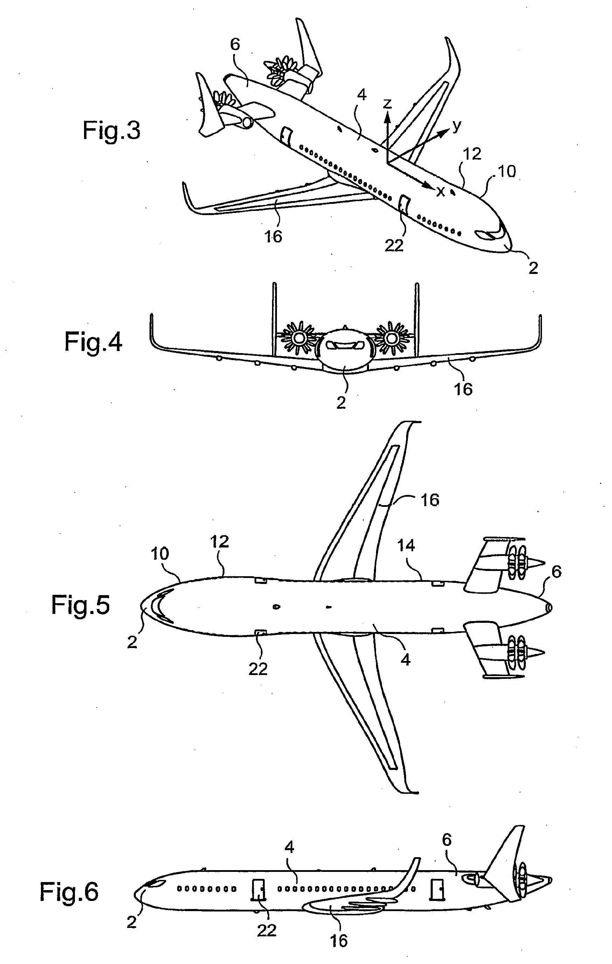

Sur la figure 3 des dessins, on a représenté pour un aéronef selon l'invention son axe de roulis (axe x), son axe de tangage (axe y) et son axe de lacet (axe z).

Tout le long de la partie centrale 4, dans une forme de réalisation préférée de l'invention, la hauteur de celui-ci (mesurée le long de l'axe de lacet) est constante (ou tout du moins sensiblement constante), comme il ressort notamment des vues de côté des variantes de réalisation d'un aéronef selon l'invention. Toutefois, on ne sortirait pas du cadre de l'invention si la hauteur de la partie centrale 4 du fuselage variait le long de son axe longitudinal (axe de roulis).

La première zone 10 de la partie centrale 4 du fuselage présente une largeur (mesurée le long de l'axe de tangage) croissante le long de l'axe de roulis, de l'avant vers l'arrière de l'aéronef. Dans cette première zone 10, la largeur du fuselage de l'aéronef croît jusqu'à une valeur maximale.

Dans la seconde zone 12 de la partie centrale 4, la largeur du fuselage de l'aéronef décroît, à partir de la valeur maximale de cette largeur jusqu'à une valeur qui correspond à la largeur de la troisième zone 14 qui est sensiblement constante.

La seconde zone 12 peut être par exemple sensiblement symétrique à la première zone 10 par rapport au plan de coupe transversal de la partie centrale 4 de plus grande largeur.

Dans une variante de réalisation non représentée aux dessins, une zone intermédiaire peut être intercalée entre la première zone 10 et la seconde zone 12. Cette zone intermédiaire, de largeur constante égale à la largeur maximale de la partie centrale 4 du fuselage est par exemple prévue pour réaliser une variante d'aéronef rallongée destinée à un plus grand nombre de passagers.

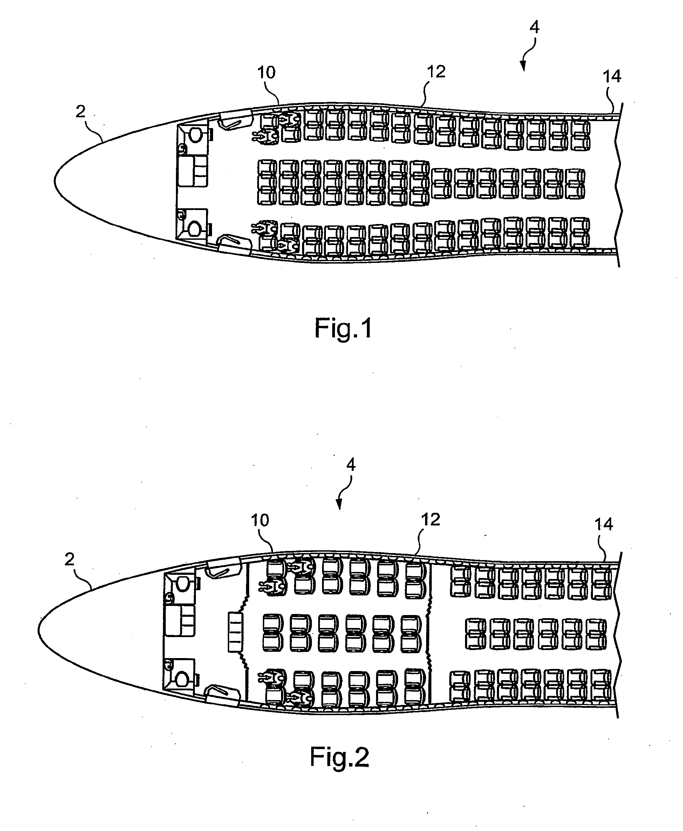

Les figures 1 et 2 notamment illustrent deux formes de réalisation d'un aménagement intérieur de la première zone 10 et de la seconde zone 12 d'un aéronef selon l'invention.

On remarque que grâce à la largeur augmentée, un volume intérieur intéressant peut être exploité dans la cabine de l'aéronef. Dans la variante de réalisation de la figure 1, la cabine de l'aéronef est aménagée avec une seule classe de confort, par exemple une classe économique. Alors que dans la troisième zone 14 et à l'arrière de la seconde zone 12, la configuration de la cabine prévoit de disposer six sièges de front, dans la zone de plus grande largeur de la première zone 10 et de la seconde zone 12, sept sièges peuvent être disposés de front. Cette forme élargie permet donc ainsi, dans l'exemple de la figure 1, de "gagner" huit sièges. Pour une compagnie aérienne, un tel gain est très appréciable.

Dans la variante de réalisation de la figure 2, la cabine de l'aéronef est aménagée selon deux classes de confort, par exemple une classe économique (à l'arrière) et une classe affaires (à l'avant). La classe affaires est disposée dans la partie centrale 4 du fuselage de plus grande largeur. Il est alors possible d'avoir dans le compartiment de classe affaires autant de sièges (six) que dans le compartiment de classe économique. Ceci est tout à fait original dans un aéronef. En effet, dans tous les aménagements connus de cabines d'aéronefs de transport civil de passagers, prévoyant deux (ou trois) classes de confort, le nombre de sièges disposés dans la largeur de l'aéronef diminue lorsque le confort augmente. Pour une compagnie aérienne, le gain de revenus avec un aéronef selon l'invention est évident. Dans la variante de la figure 2, le gain par rapport à un aéronef présentant une partie centrale de fuselage de largeur constante, est d'au moins six sièges de classe affaires.

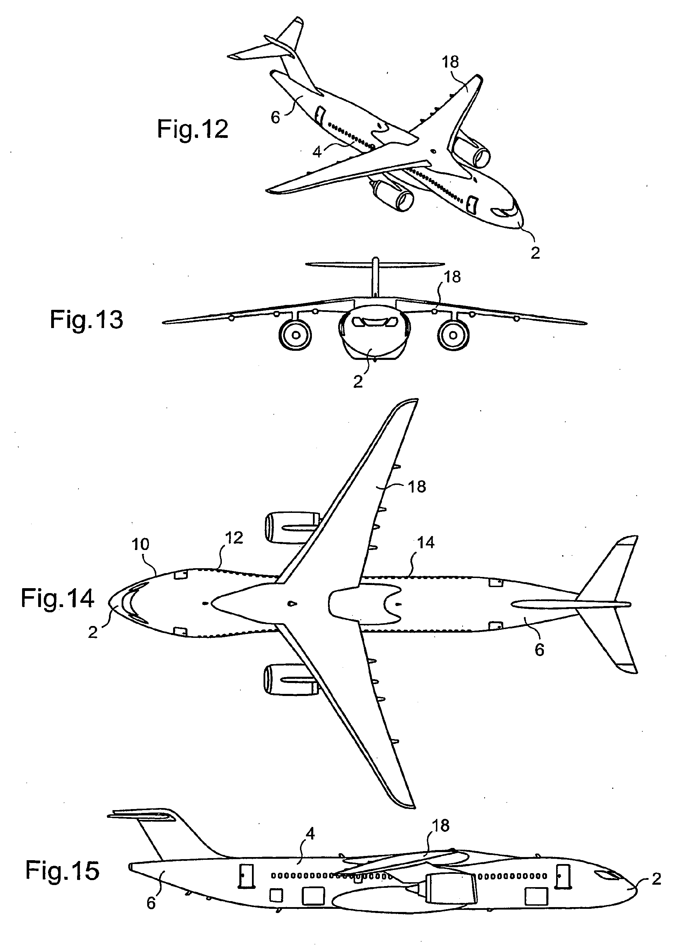

La voilure de l'aéronef est raccordée à la partie centrale 4 du fuselage au niveau de la troisième zone 14. Il peut s'agir d'une voiture 16 en position inférieure comme représenté par exemple sur les formes de réalisation des figures 3 à 11 ou bien d'une voilure 18 en position supérieure comme représenté par exemple sur les figures 12 à 15.

De préférence, les ailes de la voilure sont rattachées à la troisième zone 16 de la partie centrale 4, à distance de la seconde zone 12. Il existe donc une portion 20 de fuselage de largeur constante entre la seconde zone 12 et les ailes. Cette portion 20 "droite" peut être avantageusement utilisée pour recevoir une porte 22. Il peut s'agir de la porte d'embarquement de l'aéronef. Cette porte 22 ne se trouve alors pas à l'avant de la cabine destinée à recevoir les passagers. Ainsi, lorsque des passagers embarquent dans l'aéronef par la porte 22, selon le siège qui leur a été attribué, les passagers s'engageront à gauche ou à droite dans la cabine. Ceci permet d'augmenter la rapidité de l'embarquement des passagers dans l'aéronef de manière sensible.

Cette porte d'embarquement 22 peut également se trouver au niveau de la seconde zone 12 ou au niveau de la jonction entre la seconde zone 12 et la troisième zone 14. Un embarquement "classique" peut aussi être envisagé et est par exemple suggéré sur les figures 1, 2, 11 et 12 à 15.

Dans le cas d'un fuselage rallongé, dans lequel, comme évoqué plus haut, une zone intermédiaire est disposée entre la première zone 10 et la seconde zone 12, l'embarquement peut également être prévu à partir de cette zone intermédiaire.

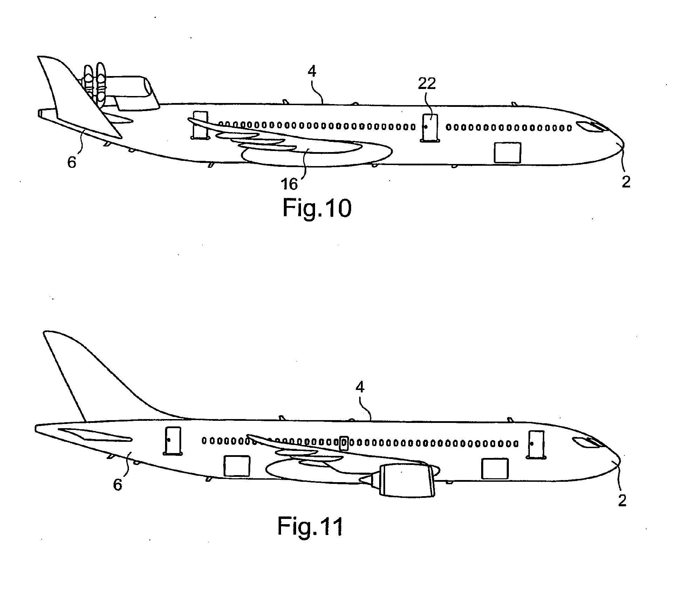

La présente invention est particulièrement bien adaptée pour des aéronefs comportant des moteurs à l'arrière. Ces moteurs sont alors portés par le fuselage arrière 6 de l'aéronef. En effet, du fait de la largeur augmentée du fuselage au niveau de la première zone 10 et de la seconde zone 12, un "déséquilibre" vers l'avant de l'aéronef est créé. Le fait de disposer les moteurs à l'arrière de l'aéronef permet de rétablir l'équilibre. Cette répartition des masses est même avantageuse pour l'aéronef par rapport à une répartition classique qui peut également être adoptée sur un aéronef selon l'invention comme l'illustrent les figures 10 à 15. Dans ces formes de réalisation, les moteurs sont disposés sous la voilure.

La position des moteurs, outre l'équilibrage intéressant des masses de l'aéronef présente également l'avantage d'être plus confortable pour les passagers. La cabine de l'aéronef est alors plus silencieuse qu'avec des moteurs en position centrale, surtout pour les passagers se trouvant assis en arrière par rapport aux moteurs.

Ces moteurs peuvent être des réacteurs (figures 11 à 15) mais une variante de l'aéronef avec des moteurs turbopropulsés à hélices, connus sous le nom anglais "propfan", permettent de limiter la consommation de l'aéronef avec des performances à peine moindres que celles obtenues avec des réacteurs (figures 3 à 8 et 10).

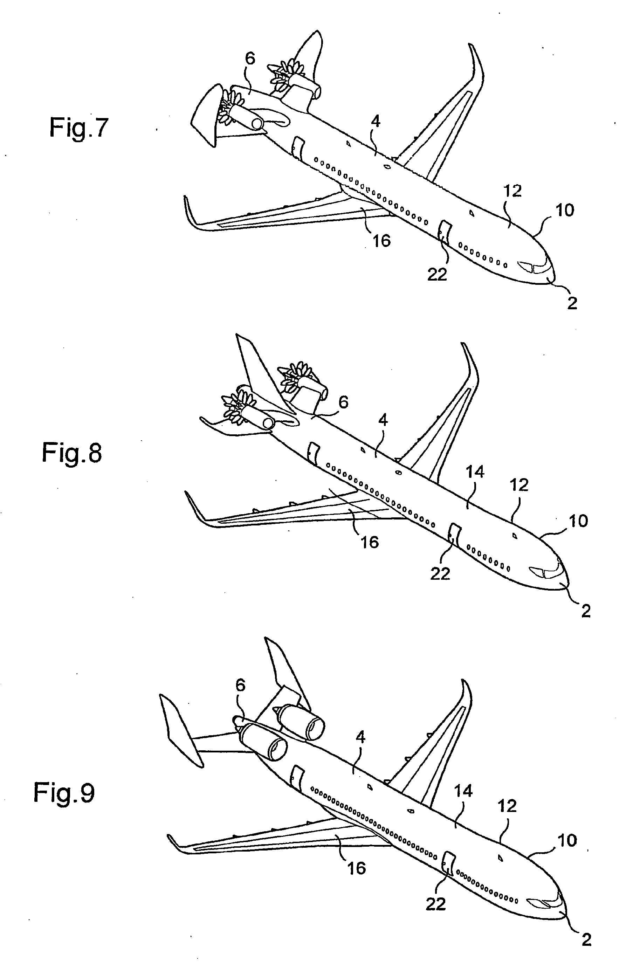

Dans une variante de réalisation des dessins, les moteurs sont attachés à l'empennage de l'aéronef (figures 3-6). Dans les formes de réalisation des figures 7 à 10, les moteurs sont raccordés directement sur la partie arrière 6 du fuselage. Les formes de réalisation des figures 7 à 11 prévoient quant à elles une disposition classique des moteurs, rattachés en dessous de la voilure.

Les figures 16 et 19 illustrent une forme de réalisation préférée d'une section transversale de la partie centrale 4 du fuselage d'un aéronef selon l'invention. Par rapport à la forme circulaire classique d'une section transversale de fuselage d'aéronef, la forme de la section proposée ici est aplatie sur le haut et le bas de manière à présenter une largeur plus importante que la hauteur. Cette forme permet, à l'intérieur de l'aéronef, de privilégier l'espace à l'intérieur de la cabine destinée à recevoir les passagers. A l'extérieur de l'aéronef, cette forme est avantageuse car elle est plus favorable sur le plan aérodynamique qu'une forme cylindrique de section circulaire.

Pour que la structure soit résistante sans présenter un trop grand nombre de renforts qui alourdissent l'aéronef et limitent l'espace exploitable à l'intérieur de celui-ci, la forme extérieure de la section transversale du fuselage de l'aéronef au niveau de sa partie centrale qui est proposée ici est une succession d'arcs de cercle raccordés entre eux.

Sur la figure 19, on a représenté quatre centres de courbure correspondant à quatre arcs de cercle définissant la forme d'une section transversale de la partie centrale du fuselage de l'aéronef. Le centre supérieur 24 représenté sur cette figure 19 est le centre de l'arc de cercle correspondant à la face inférieure de la partie centrale 4. Cette face inférieure présente un rayon de courbure R. Sur cette figure, le centre inférieur 26 correspond quant à lui au centre de l'arc de cercle correspondant à la face supérieure de la partie centrale 4 de l'aéronef. Cet arc de cercle présente lui aussi le même rayon de courbure R.

Toujours sur la figure 19, le centre 28 représenté à gauche est le centre de courbure de l'arc de cercle correspondant à la paroi latérale gauche de la partie centrale 4 de l'aéronef. Cet arc de cercle présente un rayon de courbure r, r étant inférieur à R. Par symétrie de la partie centrale 4 du fuselage de l'aéronef, le quatrième centre 30 représenté à droite sur la figure 19 correspond au centre de courbure de la paroi latérale droite du fuselage de l'aéronef et l'arc de cercle correspondant présente le même rayon de courbure r.

Comme on le remarque notamment sur les figures 16 et 17, la forme aplatie de la partie centrale 4 du fuselage telle que décrite ci-dessus favorise le volume disponible dans la cabine destinée à recevoir les passagers au détriment de la place disponible dans la soute. L'espace disponible dans la soute est tout à fait suffisant pour loger les bagages des passagers voyageant dans la cabine de l'aéronef. Toutefois il est préférable de pouvoir également transporter des conteneurs 32 standard.

La forme de réalisation des figures 16 à 18 propose de prévoir à l'arrière de la partie centrale 4, ou bien à la jonction entre la partie centrale 4 avec la partie arrière 6 du fuselage, ou bien encore à l'avant de la partie arrière 6, un espace de rangement suffisant pour recevoir par exemple deux conteneurs 32 de type LD3. L'aéronef peut alors emporter également quelques marchandises en plus des passagers voyageant dans l'aéronef. Ceci est bien entendu avantageux pour l'exploitation commerciale de l'aéronef.

Le fuselage d'aéronef présenté ci-dessus apporte ainsi de nombreux avantages par rapport à un fuselage classique d'aéronef. A l'intérieur, le fuselage proposé permet un gain d'espace tout d'abord grâce à la forme particulière de l'avant de la partie centrale du fuselage et ensuite également grâce à la forme donnée à la section transversale de cette partie centrale. Cette forme permet en outre d'améliorer les performances aérodynamiques de l'aéronef.

Un fuselage d'aéronef selon la présente invention permet également un bon centrage des masses de l'aéronef. Dans la forme de réalisation préférée avec des moteurs à l'arrière, l'équilibre des masses dans l'aéronef est tout à fait intéressant. Cette position des moteurs à l'arrière permet également d'augmenter le confort des passagers car le bruit des moteurs est moins perceptible dans la cabine de l'aéronef.

Le fuselage proposé est aussi optimisé pour permettre un embarquement et un débarquement rapide des passagers.

Enfin, comme il ressort des exemples de diverses formes de réalisation envisagées et représentées aux dessins, un fuselage selon l'invention peut permettre de réaliser des avions avec des variantes très variées comme par exemple en ce qui concerne le positionnement de la voilure et des moteurs. Il faut remarquer ici que les exemples donnés et les variantes représentées aux dessins ne sont pas exhaustifs. Comme évoqué également, le fuselage peut être rallongé, de préférence entre la première zone 10 de la partie centrale 4 du fuselage et la seconde zone 12 de cette partie centrale pour accueillir plus de passagers.

La présente invention ne se limite pas aux formes de réalisations décrites et représentées à titre d'exemples non limitatifs. Elle concerne au contraire toutes les variantes de réalisation à la portée de l'homme du métier dans le cadre des revendications ci-après.

## Revendications

1. Fuselage d'aéronef comportant une partie avant (2) avec un cockpit, une partie centrale (4) et une partie arrière (6),
**caractérisé en ce que** la partie centrale (4) du fuselage présente du côté de la partie avant (2) une première zone (10) dont la largeur, mesurée le long de l'axe de tangage, est croissante jusqu'à une largeur maximale de l'avant vers l'arrière de l'aéronef, une seconde zone (12) dont la largeur est décroissante et une troisième zone (14) en arrière de la seconde zone (12) dont la largeur est sensiblement constante, et
**en ce que** la hauteur de la partie centrale (4) du fuselage mesurée le long de l'axe de lacet est sensiblement constante,

2. Fuselage selon la revendication 1, **caractérisé en ce que** la seconde zone (12) de la partie centrale (4) du fuselage est raccordée directement à la première zone (10) de la partie centrale (4) du fuselage.

3. Fuselage selon la revendication 1, **caractérisé en ce que** la seconde zone (12) de la partie centrale (4) du fuselage est séparée de la première zone (10) de la partie centrale (4) de fuselage par une partie de fuselage dont la largeur correspond sensiblement à la largeur maximale du fuselage.

4. Fuselage selon l'une des revendications 1 à 3, **caractérisé en ce que** le fuselage présente une première porte (22) destinée à l'embarquement des passagers à l'arriére de la seconde zone (12) de la partie centrale (4) du fuselage ou à l'avant de la troisième zone (14) de la partie centrale (4) du fuselage,

5. Fuselage selon l'une des revendications 1 à 4, **caractérisé en ce que** la voilure (16, 18) est rattachée au fuselage au niveau de la troisième zone (14) de la partie centrale (4) du fuselage.

6. Fuselage selon l'une des revendications 1 à 5, **caractérisé en ce que** la section transversale de la partie centrale (4) du fuselage présente une forme arrondie aplatie présentant une largeur mesurée le long de l'axe de tangage supérieure à la hauteur mesurée le long de l'axe de lacet.

7. Fuselage selon la revendication 6, **caractérisé en ce que** la section transversale de la partie centrale (4) du fuselage présente la forme de deux arcs de cercle de grand rayon disposés l'un face à l'autre et correspondant à la partie supérieure et à la partie inférieure du fuselage central et reliés entre eux, avec une zone de transition, par deux arcs de cercle de rayon moindre et correspondants aux parois latérales de la partie centrale (4) du fuselage.

8. Fuselage selon l'une des revendications 1 à 7, **caractérisé en ce que** les moteurs sont disposés à l'arrière et sont rattachés à la partie arrière (6) du fuselage.

9. Aéronef, **caractérisé en ce qu'**il comporte un fuselage selon l'une des revendications 1 à 8.

## Claims

1. Aircraft fuselage comprising a front portion (2) with a cockpit, a central portion (4) and a rear portion (6),
**characterized in that** central portion (4) of the fuselage has adjacent the front portion (2) a first zone (10) the width of which, measured along the pitch axis, increases up to a maximum width going from the front toward the rear of the aircraft, a second zone (12) the width of which decreases and a third zone (14) rearwardly of the second zone (12) the width of which is substantially constant and
**in that** the height of the central portion (4) of the fuselage measured along the yaw axis is substantially constant.

2. Fuselage according to claim 1, **characterized in that** the second zone (12) of the central portion (4) of the fuselage is connected directly to the first zone (10) of the central portion (4) of the fuselage.

3. Fuselage according to claim 1, **characterized in that** the second zone (12) of the central portion (4) of the fuselage is separated from the first zone (10) of the central fuselage portion (4) by a fuselage portion the width of which substantially matches the maximum width of the fuselage.

4. Fuselage according to one of claims 1 to 3, **characterized in that** the fuselage has a first door (22) intended for the boarding of the passengers at the rear of the second zone (12) of the central portion (4) of the fuselage or at the front of the third zone (14) of the central portion (4) of the fuselage.

5. Fuselage according to one of claims 1 to 4, **characterized In that** the wings (16, 18) are attached to the fuselage at the third zone (14) of the central portion (4) of the fuselage.

6. Fuselage according to one of claims 1 to 5, **characterized in that** the transverse section of the central portion (4) of the fuselage has a flattened rounded shape having a width measured along the pitch axis greater than the height measured along the yaw axis.

7. Fuselage according to claim 6, **characterized in that** the cross-section of the central portion (4) of the fuselage has the shape of two arcs of a circle of large radius arranged facing one another and corresponding to the upper portion and to the lower portion of the central fuselage and connected to one another, with a transition zone, by two arcs of a circle with lesser radius and corresponding to the side walls of the central portion (4) of the fuselage.

8. Fuselage according to one of claims 1 to 7, **characterized in that** the engines are arranged at the rear and are attached to the rear portion (6) of the fuselage.

9. Aircraft, **characterized in that** it comprises a fuselage according to one of claims 1 to 8.

## Patentansprüche

1. . Flugzeugrumpf, der einen vorderen Teil (2) mit einem Cockpit, einen mittleren Teil (4) und einen hinteren Teil (6) umfasst,
**dadurch gekennzeichnet, dass** der mittlere Teil (4) des Rumpfes auf Seiten des vorderen Teils (2) eine erste Zone (10), deren Breite, die längs der Nickachse gemessen wird, in Richtung von vorne nach hinten des Flugzeugs bis zu einer maximalen Breite zunimmt, und eine zweite Zone (12), deren Breite abnimmt, sowie eine dritte Zone (14) hinter der zweiten Zone (12), deren Breite im Wesentlichen konstant ist, umfasst, und
dass die Höhe des mittleren Teils (4) des Rumpfes, die längs der Gierachse gemessen wird, im Wesentlichen konstant ist.

2. . Rumpf nach Anspruch 1, **dadurch gekennzeichnet, dass** die zweite Zone (12) des mittleren Teils (4) des Rumpfes direkt mit der ersten Zone (10) des mittleren Teils (4) des Rumpfes verbunden ist.

3. . Rumpf nach Anspruch 1, **dadurch gekennzeichnet, dass** die zweite Zone (12) des mittleren Teils (4) des Rumpfes von der ersten Zone (10) des mittleren Teils (4) des Rumpfes durch einen Rumpfabschnitt getrennt ist, dessen Breite im Wesentlichen der maximalen Breite des Rumpfes entspricht.

4. . Rumpf nach einem der Ansprüche 1 bis 3, **dadurch gekennzeichnet, dass** der Rumpf eine erste Tür (22) aufweist, die für den Einstieg von Passagieren im hinteren Teil der zweiten Zone (12) des mittleren Teils (4) des Rumpfes oder im vorderen Teil der dritten Zone (14) des mittleren Teils (4) des Rumpfes bestimmt ist.

5. . Rumpf nach einem der Ansprüche 1 bis 4, **dadurch gekennzeichnet, dass** die Tragfläche (16, 18) an den Rumpf auf Höhe der dritten Zone (14) des mittleren Teils (4) des Rumpfes angefügt ist.

6. . Rumpf nach einem der Ansprüche 1 bis 5, **dadurch gekennzeichnet, dass** der Querschnitt des mittleren Teils (4) des Rumpfes eine abgeflachte abgerundete Form aufweist, die eine Breite, die längs der Nickachse gemessen wird, aufweist, die größer ist als die Höhe, die längs der Gierachse gemessen wird.

7. . Rumpf nach Anspruch 6, **dadurch gekennzeichnet, dass** der Querschnitt des mittleren Teils (4) des Rumpfes die Form von zwei Kreisbögen mit großem Radius aufweist, die einander zugewandt angeordnet sind und dem oberen bzw. dem unteren Teil des mittleren Rumpfes entsprechen und miteinander über eine Übergangszone durch zwei Kreisbögen mit kleinerem Radius, die den Seitenwänden des mittleren Teils (4) des Rumpfes entsprechen, verbunden sind.

8. . Rumpf nach einem der Ansprüche 1 bis 7, **dadurch gekennzeichnet, dass** die Motoren am hinteren Teil (6) des Rumpfes angeordnet und daran angefügt sind.

9. , Flugzeug, **dadurch gekennzeichnet, dass** es einen Rumpf nach einem der Ansprüche 1 bis 8 enthält.
